# EUROPEAN PATENT SPECIFICATION

(11) **EP 2 991 187 B1**
(45) Date of publication and mention of the grant of the patent: **20.03.2019**
(21) Application number: 13883060.9
(22) Date of filing: 07.08.2013
(51) Int. Cl.: H02J 7/00, G06F 1/26

(54) **MOBILE TERMINAL WITH MULTI-PORT CHARGING CONTROL FUNCTION**
MOBILES ENDGERÄT MIT MULTIPORT-LADUNGSSTEUERUNGSFUNKTION
TERMINAL MOBILE À FONCTION DE COMMANDE DE CHARGE MULTI-PORTS

(30) Priority: 24.04.2013 CN 201310144667
(43) Date of publication of application: 02.03.2016
(73) Proprietor: Huizhou TCL Mobile Communication Co., Ltd., Huizhou, Guangdong 516006 (CN)
(72) Inventor: ZHAO, Shiqing, Huizhou Guangdong 516006 (CN)
(74) Representative: Brachmann, Roland W.
(86) International application number: PCT/CN2013/080957
(87) International publication number: WO 2014/173037

(56) References cited:
- CN-A- 101 359 836
- CN-A- 103 219 770
- CN-Y- 200 994 072
- CN-Y- 201 167 243
- US-A1- 2008 111 522
- US-A1- 2010 090 644

## Description

The present invention relates to the field of charging technologies, and particularly to a mobile terminal with a multi-port charging control function.

Smart phones, tablet computers and other mobile terminals with their powerful functions and convenience play an important role in people's work and life. It can be seen from current development trends of mobile terminals that smart terminals have increasingly larger display screens, more powerful functions, and a higher processing speed, and support multiple universal serial bus (USB) interfaces, but these development trends cause the mobile terminals to consume more power. In order to extend standby time of mobile terminals, a method of increasing battery capacity is adopted. However, due to an increase in the battery capacity, in order to ensure that the charging time is not changed, it is necessary to increase a charging current, which inevitably puts forward a higher requirement on a charging system.

At present, low-energy mobile phones or tablet computers are charged mainly through a single interface. A current carried by a USB interface is designed according to a USB interface industry standard, and a nominal current (that is, charging current) is required to be 500mA, which is far from meeting the requirements for large battery capacity and a same or shorter charging time of the ever-growing mobile terminals. More and more mobile terminals require charging currents much higher than the current provided by a standard USB. Therefore, how to achieve large-current charging and stable power supply for smart terminals is worth studying and has great application value.

There are mainly three charging manners in the prior art: the first one is charging through a USB interface, which is only suitable for small-current charging, and the charging time will be prolonged if battery capacity of a mobile terminal is large. The second one is charging by using a DC charging stand; DC charging stands on the market are non-standard, and need a special DC charging interface; the limitation to the type of the USB interface leads to an increase in the number of special accessories of the mobile terminal, thereby greatly increasing the cost, and resulting in poor user experience. The third one is hybrid charging, that is, a USB interface is used for small-current charging, and a special DC charging interface is used for large-current charging; such a manner has high requirements for control over values of currents, combination of large and small currents, and compatibility of the USB interface, and has a high cost.

Therefore, the prior art remains to be improved and enhanced.

US 2008/0111522 A1 relates to a method and a system for charging an electronic device. The method includes negotiating a first current supply from a first charging port. The first charging port is one of a plurality of charging ports present on a current-supplying device. The current-supplying device is connected to a charging device which, in turn, is connected to an electronic device, e.g., a mobile phone. The electronic device can be charged by using the charging device, which acts as an interface between the current-supplying device and the electronic device. Current negotiations take place between the electronic device and the current-supplying device. To this effect, a microcontroller of the charging device uses an extraction module to extract the first current supply from a first charging port of the current-supplying device. The microcontroller can negotiate for a second current supply with the current-supply device. Examples of the charging device include a laptop charger, a mobile phone charger, a rechargeable battery charger, and the like such that the charging device is a separate devices from the electronic device. Further, the method includes negotiating a second current supply from a second charging port, the second charging port is one of the plurality of charging ports. Furthermore, the method includes combining the first current supply and the second current supply to provide a combined current supply for charging the battery of the electronic device.

US 2010/0090644 A1 relates to an apparatus includes a connector, for providing a physical connection to a USB device, a detection circuit, operable to detect attachment of a USB device; and a charging circuit, for charging a battery of a portable device using current drawn from a USB device, the charging circuit being operable, if it is detected that a USB device is attached, to generate a startup request signal. The apparatus has a charging mode in which power is provided by the charging circuit to the battery, and a USB connection mode for providing a USB connection. The apparatus also includes a control unit, operable in response to the start-up request signal to determine whether power supplied by the battery meets a predetermined criterion. The control unit is also operable, if it is determined that the predetermined criterion is not met, to control the apparatus to be in the charging mode and prevent the apparatus from entering the USB connection mode and operable, if it is determined that predetermined criterion is met, to control the apparatus to enter the USB connection mode.

In view of the deficiencies of the prior art, an objective of the present invention is to provide a mobile terminal with a multi-port charging control function, so as to solve the problems of long charging time of a battery and poor compatibility of a USB interface in the prior art.

This problem is solved according to the features of the independent claim. Further embodiments result from the depending claims.

In order to achieve the foregoing objective, the present invention uses the following technical solutions:
A mobile terminal, including: a battery; at least a first USB interface and a second USB interface; a central processing unit (CPU); a charging management chip; and a USB charging management module, where the USB charging management module is configured to output a corresponding detection voltage according to charger connection conditions of the USB interface, configured to turn on or off a charging channel of the corresponding USB interface according to an on/off command output by the CPU to generate a respective charging current, and configured to: when the charging channel is turned on, control a value of a charging current according to an adjustment signal sent by the CPU, combine the charging current, and transmit the combined charging current to the charging management chip; the USB charging management module comprising at least a first charger detection module and a second charger detection module configured to detect whether a charger is connected to a respective USB interface, and output the detection voltage to the CPU; the USB charging management module comprising at least a first charging current control module and a second charging current control module, configured to turn on or off the respective charging channel according to the on/off command, and configured to control a value of the charging current according to the adjustment signal; the USB charging management module comprising at least a first data processing module and a second data processing module, configured to perform anti-interference and anti-static processing on USB data transmitted by the CPU; and the USB charging management module comprising a current combiner, configured to combine the charging currents, and transmit the charging currents to the charging management chip; the CPU is configured to identify the charger connection conditions of the USB interface according to the detection voltage and output the corresponding on/off command, and configured to acquire the value of the charging current and output the adjustment signal to the USB
charging management module; the charging management chip is configured to transmit the charging current output by the USB charging management module to the battery to charge the battery, where the battery is connected to the USB charging management module through the charging management chip, and both the USB interfaces and the CPU are connected to the USB charging management module; the first charger detection module, the first charging current control module and the first data processing module are connected to the first USB interface and the CPU; the second charger detection module, the second charging current control module and the second data processing module are connected to the second USB interface and the CPU; and the first charging current control module and the second charging current control module are connected to the current combiner.

According to an embodiment, the number of the charger detection modules, the number of the charging current control modules, and the number of the data processing modules are the same as the number of the USB interfaces.

According to an embodiment, that the charger detection modules, the charging current control modules and the data processing modules are all connected to a respective USB interface and the CPU, and the charging current control modules are connected to the charging management chip through the current combiner.

According to an embodiment, in the mobile terminal, the first charger detection module includes a first resistor, a second resistor, a third resistor and a first transistor; the first charging current control module includes a fourth resistor, a fifth resistor, a second transistor and a first capacitor; and the first data processing module includes a first
common-mode suppression coil, a first TVS tube, a second TVS tube and a third TVS tube.

According to an embodiment, in the mobile terminal, the base of the first transistor is connected to a power source end of the first USB interface and the emitter of the second transistor through the first resistor, the base of the first transistor is further grounded through the second resistor, the collector of the first transistor is connected to the CPU and is further connected to a power source end through the third resistor, and the emitter of the first transistor is grounded; and the emitter of the second transistor is connected to the power source end of the first USB interface, the emitter of the second transistor is grounded through the first capacitor, and the base of the second transistor is connected to the CPU through the fourth resistor.

According to an embodiment, in the mobile terminal, a first end of the first common-mode suppression coil is connected to a positive data line end of the first USB interface and the anode of the third TVS tube, a second end of the first common-mode suppression coil is connected to the CPU, a third end of the first common-mode suppression coil is connected to a negative data line end of the first USB interface and the anode of the second TVS tube, and a fourth end of the first common-mode suppression coil is connected to the CPU; the anode of the first TVS tube is connected to an identification end of the first USB interface and the CPU; and the cathode of the first TVS tube, the cathode of the second TVS tube and the cathode of the third TVS tube are all grounded.

According to an embodiment, in the mobile terminal, the first transistor is an NPN transistor.

According to an embodiment, in the mobile terminal, the second charger detection module includes a sixth resistor, a seventh resistor, an eighth resistor and a third transistor; the second charging current control module includes a ninth resistor, a tenth resistor, a fourth transistor and a second capacitor; and the second data processing module includes a second common-mode suppression coil, a fourth TVS tube, a fifth TVS tube and a sixth TVS tube.

According to an embodiment, in the mobile terminal, the base of the third transistor is connected to a power source end of the second USB interface and the emitter of the fourth transistor through the sixth resistor, the base of the third transistor is further grounded through the seventh resistor, the collector of the third transistor is connected to the CPU and is further connected to a power source end through the eighth resistor, and the emitter of the third transistor is grounded; and the emitter of the fourth transistor is grounded through the second capacitor, and the base of the fourth transistor is connected to the CPU through the ninth resistor.

According to an embodiment, in the mobile terminal, a first end of the second common-mode suppression coil is connected to a positive data line end of the second USB interface and the anode of the sixth TVS tube, a second end of the second common-mode suppression coil is connected to the CPU, a third end of the second common-mode suppression coil is connected to a negative data line end of the first USB interface and the anode of the fifth TVS tube, and a fourth end of the second common-mode suppression coil is connected to the CPU; the anode of the fourth TVS tube is connected to an identification end of the second USB interface and the CPU; and the cathode of the fourth TVS tube, the cathode of the fifth TVS tube and the cathode of the sixth TVS tube are all grounded.

According to an embodiment, in the mobile terminal, the second transistor is a PNP transistor.

According to an embodiment, in the mobile terminal, the current combiner includes an eleventh resistor; one end of the fifth resistor is connected to the CPU and the collector of the second transistor, and the other end of the fifth resistor is connected to the CPU and one end of the eleventh resistor; and one end of the tenth resistor is connected to the CPU and the collector of the fourth transistor, and the other end of the tenth resistor is connected to the CPU and one end of the eleventh resistor.

Compared with the prior art, according to a mobile terminal with a multi-port charging control function provided in the present invention, during charging, a USB charging management module detects charger connection conditions of a USB interface to output a corresponding detection voltage to a CPU so that the CPU identifies a charger
connection state of the USB interface; the CPU outputs a corresponding on/off command to turn on/off a charging channel of the corresponding USB interface, and when the charging channel is turned on, controls a value of a charging current, combines the charging current, and transmits the combined charging current to a charging management chip to charge a battery. A requirement for large-current charging is met by using multiple USB interfaces in parallel for charging, which greatly reduces charging time of the battery, is easy to operate, and has a low cost.

The aforementioned characteristics, features and advantages of the invention as well as the way they are achieved will be further illustrated in connection with the following examples and considerations as discussed in view of the figures.
- FIG.1: is a structural block diagram of a mobile terminal with a multi-port charging control function;
- FIG.2: is a circuit diagram of a USB charging management module in a mobile terminal with a multi-port charging control function;
- FIG.3: is a structural block diagram of a first preferred embodiment of a mobile terminal with a multi-port charging control function according to the present invention; and
- FIG.4: is a circuit diagram of a second preferred embodiment of a mobile terminal with a multi-port charging control function according to the present invention.

An existing mobile terminal is provided with multiple USB interfaces, and when a USB charger is connected to a USB interface, a VBUS end (power source end) of the USB interface generates a voltage of +5V, where a nominal current of 500mA. A DM end of the USB interface is a positive data line end, a DP end is a negative data line end, an ID end is an identification end, and a GND end is a ground end.

In order to improve charging efficiency, the mobile terminal with a multi-port charging control function provided in the present invention makes full use of the existing multiple USB interfaces for parallel charging, that is, during charging, the USB interfaces are independent of each other and are comprehensively managed by the CPU. The CPU monitors a charging state of each USB interface separately, including USB charger connection detection, on/off of the charging channel, control over a value of a charging current, combination of multiple charging currents and the like. The multiple USB interfaces are equivalent to a building-block charging interface, and the number of chargers connected to the USB interfaces can be arbitrarily increased or decreased.

In order to make the objective, technical solutions and effects of the present invention clearer, the present invention is further described below in detail with reference to the accompanying drawings and embodiments. It should be understood that, specific embodiments described herein are only intended to explain the present invention, but not to limit the present invention.

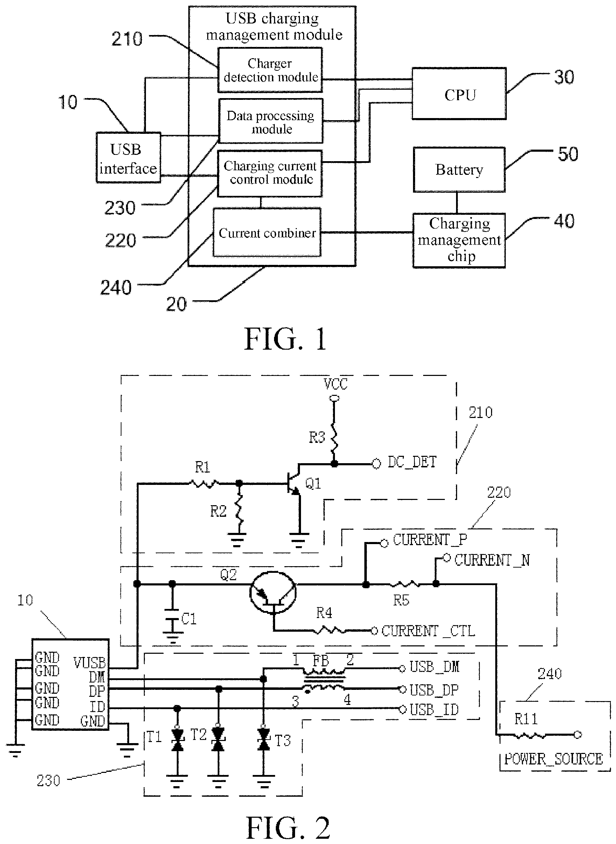

Referring to FIG.1, FIG.1 is a structural block diagram of a mobile terminal with a multi-port charging control function. The mobile terminal includes a USB interface 10, a USB charging management module 20, a CPU 30, a charging management chip 40 and a battery 50. The battery 50 is connected to the USB charging management module 20 through the charging management chip 40, and both the USB interface 10 and the CPU 30 are connected to the USB charging management module 20. The USB charging management module 20 outputs a corresponding detection voltage to the CPU 30 according to charger connection conditions of the USB interface. The CPU 30 identifies the charger connection conditions of the USB interface according to the detection voltage and outputs a corresponding on/off command to the USB charging management module 20. The USB charging management module 20 turns on/off a charging channel of the corresponding USB interface according to the on/off command, and when the charging channel is turned on, controls a value of a charging current according to an adjustment signal, combines the charging current, and then transmits the combined charging current to the charging management chip 40 to charge the battery 50. The USB charging management module 20 includes a charger detection module 210, a charging current control module 220, a data processing module 230 and a current combiner 240. The charger detection module 210, the charging current control module 220 and the data processing module 230 are all connected to the USB interface 10 and the CPU 30, and the charging current control module 220 is connected to the charging management chip 40 through the current combiner 240. The charger detection module 210 detects whether a charger is connected to the USB interface 10 of the mobile terminal, and outputs the corresponding detection voltage to the CPU 30. The charging current control module 220 turns on/off the charging channel of the corresponding USB interface 10 according to the on/off command transmitted by the CPU 30; when the charging channel is turned on, the CPU 30 acquires the value of the charging current and outputs a corresponding adjustment signal to the USB charging management module to adjust the value of the charging current. The current combiner 240 combines the charging current output by the charging current control module 220 and then transmits the charging current to the charging management chip 40. The data processing module 230 performs anti-interference and anti-static processing on USB data transmitted by the CPU.

Referring to FIG.2, FIG.2 is a circuit diagram of a USB charging management module in a mobile terminal with a multi-port charging control function. As shown in FIG.2, the charger detection module 210 includes a first resistor R1, a second resistor R2, a third resistor R3 and a first transistor Q1; the base of the first transistor Q1 is connected to a VUSB end of the USB interface 10 through the first resistor R1, the base of the first transistor Q1 is further grounded through the second resistor R2, the collector of the first transistor Q1 is connected to the CPU 30 and is further connected to a power source end VCC through the third resistor R3, and the emitter of the first transistor Q1 is grounded. When no charger is connected to the USB interface 10, the VUSB end is suspended, and a DC_DET signal output by the collector of the first transistor Q1 is pulled up to a high level by the third resistor R3.

The first transistor Q1 is an NPN transistor. When detecting that the DC_DET signal is at a high level, the CPU 30 identifies that no charger is connected to the USB interface; it is unnecessary to turn on the charging channel corresponding to the USB interface, and the CPU30 outputs an off command to the charging current control module 220. When a charger is connected to the USB interface, the VUSB end outputs a nominal voltage of 5V to turn on the first transistor Q1, and the DC_DET signal output by the collector is pulled down from a high level to a low level. When detecting that the DC_DET signal is at a low level, the CPU 30 identifies that a charger is connected to the USB interface; at this time, it is necessary to turn on the charging channel corresponding to the USB interface for charging, and the CPU30 outputs an on command to the charging current control module 220. The first resistor R1 is a current-limiting resistor, the second resistor R2 is a pull-down protection resistor, and the two are combined to protect the first transistor Q1 from being damaged by a large current.

The charging current control module 220 includes a fourth resistor R4, a fifth resistor R5, a second transistor Q2 and a first capacitor C1; the base of the second transistor Q2 is connected to the CPU 30 through the fourth resistor R4, and the emitter of the second transistor Q2 is connected to the VUSB end of the USB interface 10 and is further grounded through the first capacitor C1; one end of the fifth resistor R5 is connected to the CPU 30 and the collector of the second transistor Q2, and the other end of the fifth resistor R5 is connected to the CPU 30 and the current combiner 240. The second transistor Q2 is a high-power PNP transistor. When identifying that a charger is connected to the USB interface 10, the CPU 30 outputs a low-level CURRENT_CTL signal which is input to the base of the second transistor Q2 through the fourth resistor R4, to turn on the second transistor Q2, and a current from the VUSB end of the USB interface 10 flows through the fifth resistor R5. At this time, one end of the fifth resistor R5 outputs a CURRENT_P signal (that is, one charging signal, expressed in the form of a voltage value) to the CPU 30, and the other end of the fifth resistor R5 outputs a CURRENT_N signal (that is, another charging signal, expressed in the form of a voltage value) to the CPU 30. A resistance value of the fifth resistor R5 is a known fixed value, and the CPU 30 can calculate the value of the charging current according to a voltage difference between the CURRENT_P signal and the CURRENT_N signal and the resistance value of the fifth resistor R5. Generally, a charging current generated is 500mA, which is the nominal current, and in the subsequent charging process, the CPU 30 may output CURRENT_P signals at different levels according to the battery level, to adjust the turn-on degree of the second transistor Q2, thereby adjusting the value of the charging current, which prevents the battery from being damaged by an excessively large charging current when the battery is about to be fully charged, and can further ensure stability of the charging process. The first capacitor C1 is used for energy storage and denoising during charging, to ensure stability of the charging current.

The data processing module 230 includes a common-mode suppression coil FB for anti-interference, and a first TVS tube T1, a second TVS tube T2 and a third TVS tube T3 for anti-static processing; a first end 1 of the common-mode suppression coil FB is connected to a DM end of the USB interface 10 and the anode of the third TVS tube T3; a second end 2 of the common-mode suppression coil FB is connected to the CPU 30, and is configured to transmit a USB_DM signal (positive data); a third end 3 of the common-mode suppression coil FB is connected to a DP end of the USB interface 10 and the anode of the second TVS tube T2; a fourth end 4 of the common-mode suppression coil FB is connected to the CPU 30, and is configured to transmit a USB_DP signal (negative data); the anode of the first TVS tube T1 is connected to an ID end of the USB interface 10 and the CPU 30, and is configured to transmit a USB_ID signal (identity authentication information); and the cathode of the first TVS tube T1, the cathode of the second TVS tube T2 and the cathode of the third TVS tube T3 are all grounded.

The current combiner 240 includes a current combining resistor R11, one end of the current combining resistor R11 is connected to the other end of the fifth resistor R5 of the charging current control module 220, and the other end of the current combining resistor R11 is connected to the charging management chip 40. After flowing through the current combining resistor R11, charging currents output by the fifth resistor R5 form a total charging current POWER_SOURCE, which is transmitted to the charging management chip 40 for processing, and then used to charge the battery. One USB interface 10 is adaptive to one charger detection module 210, one charging current control module 220 and one data processing module 230. If there are multiple USB interfaces 10, there will be a same number of charger detection modules 210, charging current control modules 220 and data processing modules 230 correspondingly. At this time, the current combiner 240 combines charging currents generated by multiple charging current control modules 220 to form an ultimate large total charging current, and then the battery 50 is charged by the charging management chip 40.

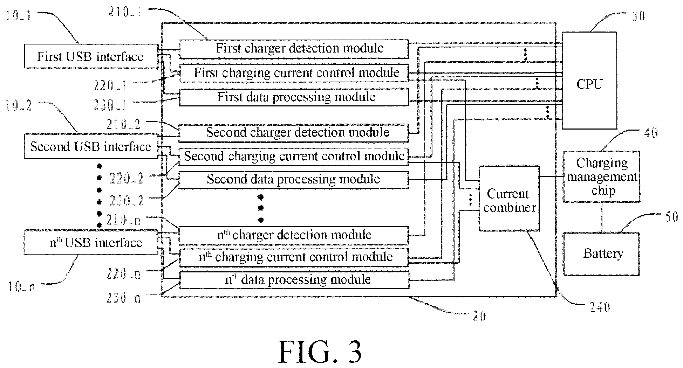

During specific implementation, at least one USB interface is provided, and the number of the charger detection modules, the number of the charging current control modules and the number of the data processing modules are the same as the number of the USB interfaces. Referring to FIG.3, FIG.3 is a structural block diagram of a first preferred embodiment of a mobile terminal with a multi-port charging control function according to the present invention. As shown in FIG.2, the number of USB interfaces is n (n is a positive integer), which are a first USB interface 10_1, a second USB interface 10_2..., and an n^{th} USB interface 10_n, respectively. The number of charger detection modules is n correspondingly, which are a first charger detection module 210_1, a second charger detection module 210_2..., and an n^{th} charger detection module 210_n, respectively. The number of charging current control modules is n correspondingly, which are a first charging current control module 220_1, a second charging current control module 220_2..., and an n^{th} charging current control module 220_n, respectively. The number of data processing module is n correspondingly, which are a first data processing module 230_1, a second data processing module 230_2..., and an n^{th} data processing module 230_n, respectively.

The first charger detection module 210_1, the first charging current control module 220_1 and the first data processing module 230_1 are connected to the first USB interface 10_1 and the CPU 30. The second charger detection module 210_2, the second charging current control module 220_2 and the second data processing module 230_2 are connected to the second USB interface 10_2 and the CPU 30. The rest may be deduced by analogy, that is, the n^{th} charger detection module 210_n, the n^{th} charging current control module 220_n and the n^{th} data processing module 230_n are connected to the n^{th} USB interface 10_n and the CPU 30. The first charging current control module 220_1, the second charging current control module 220_2..., and the n^{th} charging current control module 220_n are connected to the current combiner 240.

It should be noted that, circuit structures of the first USB interface 10_1, the second USB interface 10_2..., and the n^{th} USB interface 10_n are the same as the circuit structure of the USB interface 10 in the implementation shown in FIG.2. Circuit structures of the first charger detection module 210_1, the second charger detection module 210_2..., and the n^{th} charger detection module 210_n are the same as the circuit structure of the charger detection module 210 in the implementation shown in FIG.2. Circuit structures of the first charging current control module 220_1, the second charging current control module 220_2..., and the n^{th} charging current control module 220_n are the same as the circuit structure of the charging current control module 220 in the implementation shown in FIG.2. Circuit structures of the first data processing module 230_1, the second data processing module 230_2..., and the n^{th} data processing module 230_n are the same as the circuit structure of the data processing module 230 in the implementation shown in FIG.2. In specific implementation, electronic devices are named differently to distinguish one from another, but connection relationships and working principles thereof are the same.

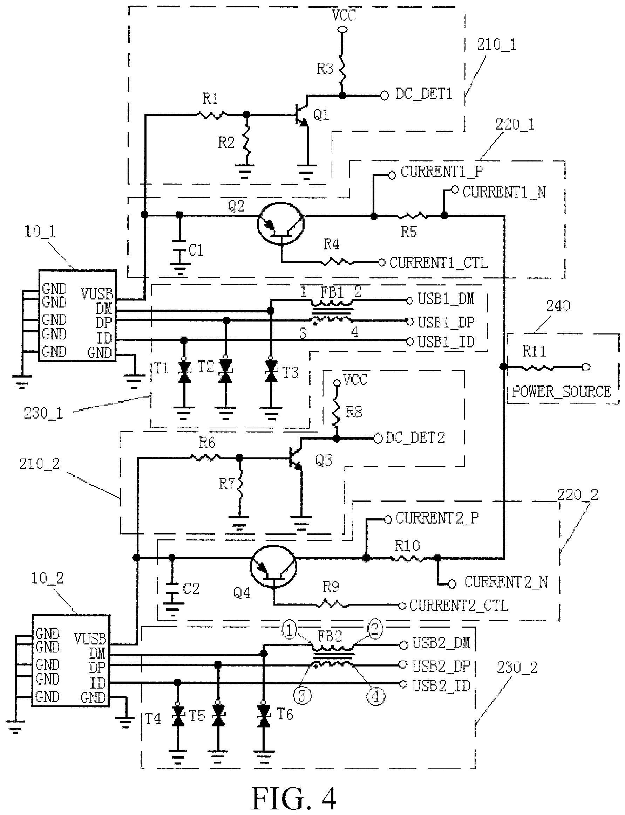

The circuit structure and the working principle of the mobile terminal with a multi-port charging control function in the present invention are specifically illustrated below by using that n=2 and chargers are separately connected to the two USB interfaces as an example; referring to FIG.4, FIG.4 is a circuit diagram of a second preferred embodiment of a mobile terminal with a multi-port charging control function according to the present invention. The number of USB interfaces is two, which are a first USB interface 10_1 and a second USB interface 10_2, respectively; the charging management module 20 includes a first charger detection module 210_1, a second charger detection module 210_2, a first charging current management module 220_1, a second charging current management module 220_2, a first data processing module 230_1, a second data processing module 230_2 and a current combiner 240. The first charger detection module 210_1, the first charging current control module 220_1 and the first data processing module 230_1 are connected to the first USB interface 10_1 and the CPU 30; the second charger detection module 210_2, the second charging current control module 220_2 and the second data processing module 230_2 are connected to the second USB interface 10_2 and the CPU 30; and the first charging current control module 220_1 and the second charging current control module 220_2 are connected to the current combiner 240.

Circuitry of the first charger detection module 210_1 is the same as that of the charger detection module 210 in the USB charging management module in the implementation shown in FIG.2, and includes a first resistor R1, a second resistor R2, a third resistor R3 and a first transistor Q1; circuitry of the first charging current control module 220_1 is the same as that of the charging current control module 220 in the USB charging management module in the implementation shown in FIG.2, and includes a fourth resistor R4, a fifth resistor R5, a second transistor Q2 and a first capacitor C1; circuitry of the first data processing module 230_1 is the same as that of the data processing module 230 in the USB charging management module in the implementation shown in FIG.2, and includes a first common-mode suppression coil FBI, a first TVS tube T1, a second TVS tube T2 and a third TVS tube T3; the second charger detection module 210_2 includes a sixth resistor R6, a seventh resistor R7, an eighth resistor R8 and a third transistor Q3; the second charging current control module 220_2 includes a ninth resistor R9, a tenth resistor R10, a fourth transistor Q4 and a second capacitor C2; the second data processing module 230_2 includes a second common-mode suppression coil FB2, a fourth TVS tube T4, a fifth TVS tube T5 and a sixth TVS tube T6; and the current combiner 240 includes an eleventh resistor R11. The circuit structure of the first charger detection module 210_1 is the same as that of the second charger detection module 210_2; names of the electronic devices are modified correspondingly to distinguish one from another, but connection relationships between the electronic devices and the working principles thereof are the same. For example, the first resistor R1 and the sixth resistor R6 have different names, which are intended to distinguish electronic devices in two charger detection modules, but in fact, the first resistor R1 and the sixth resistor R6 are equivalent, both of which represent the first resistor R1 in the charger detection module 210 shown in FIG.2. Situations of other modules can be inferred in the same way.

The base of the first transistor Q1 is connected to a VUSB end of the first USB interface 10_1 and the emitter of the second transistor Q2 through the first resistor, the base of the first transistor Q1 is further grounded through the second resistor R2, the collector of the first transistor Q1 is connected to the CPU 30 and is further connected to a power source end VCC through the third resistor R3, and the emitter of the first transistor Q1 is grounded. The first transistor Q1 is an NPN transistor, whose collector outputs a DC_DET1 signal to the CPU 30.

The emitter of the second transistor Q2 is grounded through the first capacitor C1, and the base of the second transistor Q2 is connected to the CPU 30 through the fourth resistor R4; one end of the fifth resistor R5 is connected to the CPU 30 and the collector of the second transistor Q2, and the other end of the fifth resistor R5 is connected to the CPU 30 and one end of the eleventh resistor R11. The second transistor Q2 is a high-power PNP transistor. One end of the fifth resistor R5 outputs a CURRENT1_P signal to the CPU 30, and the other end of the fifth resistor R5 outputs a CURRENT1_N signal to the CPU 30.

A first end 1 of the first common-mode suppression coil FB1 is connected to a DM end of the first USB interface 10_1 and the anode of the third TVS tube T3, a second end 2 of the first common-mode suppression coil FB 1 is connected to the CPU 30, a third end 3 of the first common-mode suppression coil FB1 is connected to a DP end of the first USB interface 10_1 and the anode of the second TVS tube T2, and a fourth end 4 of the first common-mode suppression coil FB1 is connected to the CPU 30; the anode of the first TVS tube T1 is connected to an ID end of the first USB interface 10_1 and the CPU 30; and the cathode of the first TVS tube T1, the cathode of the second TVS tube T2 and the cathode of the third TVS tube T3 are all grounded. A USB1_DM signal is transmitted between the second end 2 of the first common-mode suppression coil FB1 and the CPU 30, a USB1_DP signal is transmitted between the fourth end 4 of the first common-mode suppression coil FB1 and the CPU 30, and a USB1_ID is transmitted between the ID end of the first USB interface 10_1 and the CPU 30.

The base of the third transistor Q3 is connected to a VUSB end of the second USB interface 10_2 and the emitter of the fourth transistor Q4 through the sixth resistor R6, the base of the third transistor Q3 is further grounded through the seventh resistor R7, the collector of the third transistor Q3 is connected to the CPU 30 and is further connected to a power source end VCC through the eighth resistor R8, and the emitter of the third transistor Q3 is grounded. The third transistor Q3 is an NPN transistor, whose collector outputs a DC_DET2 signal to the CPU 30.

The emitter of the fourth transistor Q4 is grounded through the second capacitor C2, and the base of the fourth transistor Q4 is connected to the CPU 30 through the ninth resistor R9; one end of the tenth resistor R10 is connected to the CPU 30 and the collector of the fourth transistor Q4, and the other end of the tenth resistor R10 is connected to the CPU 30 and one end of the eleventh resistor R11. The fourth transistor Q4 is a high-power PNP transistor. One end of the tenth resistor R10 outputs a CURRENT2_P signal to the CPU 30, and the other end of the tenth resistor RIO outputs a CURRENT2_N signal to the CPU 30.

A first end ① of the second common-mode suppression coil FB2 is connected to a DM end of the second USB interface 10_2 and the anode of the sixth TVS tube T6, a second end ② of the second common-mode suppression coil FB2 is connected to the CPU 30, a third end ③ of the second common-mode suppression coil FB2 is connected to a DP end of the second USB interface 10_2 and the anode of the fifth TVS tube T5, and a fourth end ④ of the second common-mode suppression coil FB2 is connected to the CPU 30; the anode of the fourth TVS tube T4 is connected to an ID end of the second USB interface 10_2 and the CPU 30; and the cathode of the fourth TVS tube T4, the cathode of the fifth TVS tube T5 and the cathode of the sixth TVS tube T6 are all grounded. A USB2_DM signal is transmitted between the second end ② of the second common-mode suppression coil FB2 and the CPU 30, a USB2_DP signal is transmitted between the fourth end ④ of the second common-mode suppression coil FB2 and the CPU 30, and a USB2_ID signal is transmitted between the ID end of the second USB interface 10_2 and the CPU 30.

Assuming that chargers are separately connected to the first USB interface 10_1 and the second USB interface 10_2, the VUSB end of the first USB interface 10_1 and the VUSB end of the second USB interface 10_2 both output a voltage of 5V, to turn on the first transistor Q1 and the third transistor Q3 separately, and change the DC_DET1 signal and the DC_DET2 to be low-level signals, which are transmitted to the CPU 30. The CPU 30 identifies that chargers are separately connected to the first USB interface 10_1 and the second USB interface 10_2, and at this time, the CPU 30 outputs a low-level CURRENT1_CTL which is input to the base of the second transistor Q2 through the fourth resistor R4, and a low-level CURRENT2_CTL which is input to the base of the fourth transistor Q4 through the ninth resistor R9. The second transistor Q2 and the fourth transistor Q4 are both turned on; the VUSB end of the first USB interface 10_1 outputs a current flowing through the fifth resistor R5, thereby generating a charging current 1 flowing to one end of the current combining resistor R11; meanwhile, the VUSB end of the second USB interface 10_2 also outputs a current flowing through the tenth resistor R10, thereby generating a charging current 2 flowing to one end of the current combining resistor R11. The current combining resistor R11 combines the charging current 1 and the charging current 2 which then flow out from the other end of the current combining resistor R11, to form a total charging current POWER_SOURCE to the charging management chip 40 to charge the battery 50. During charging, the CPU 30 calculates the value of the charging current 1 according to a voltage difference between the CURRENT1_P signal output by one end of the fifth resistor R5 and the CURRENT1_N signal output by the other end of the fifth resistor R5, and a resistance value of the fifth resistor R5; likewise, the CPU 30 calculates the value of the charging current 2 according to a voltage difference between the CURRENT2_P signal output by one end of the tenth resistor R10 and the CURRENT2_N signal output by the other end of the tenth resistor R10 and a resistance value of the tenth resistor R10. The charging current 1 and the charging current 2 are generally maintained at 500mA, in this way, the charging current 1 and the charging current 2 form a total charging current of 1000mA after being combined through the current combining resistor R11, so as to charge the battery 50, and charging time of a large-capacity battery is maintained or shortened by increasing a charging current. In addition, the CPU 30 can further output a CURRENT1_CTL signal and a CURRENT2_CTL signal with corresponding level values to adjust the values of the charging current 1 and the charging current 2. During specific implementation, the CPU 30 can arbitrarily adjust a value of a charging current provided by any one or more USB interfaces.

It should be understood that, each USB interface is independent, and can provide a nominal current of 500mA. A charger can provide a nominal current when connected to any USB interface. The total charging current is the sum of nominal currents of multiple USB interfaces to which chargers are connected, equivalent to parallel charging of the multiple USB interfaces; in this way, regardless of a type of a USB interface, charging can be achieved as long as a charger is connected to the USB interface, and large-current charging can be performed when multiple chargers are connected to USB interfaces, thereby improving compatibility of the USB interfaces.

To sum up, according to the present invention, the charger detection module detects whether a charger is connected, and outputs a detection result (that is, a low-level DC_DET signal) to notify the CPU when the charger is connected; the CPU identifies that the charger is connected to the USB interface, outputs an on command (that is, a low-level CURRENT_CTL signal) to turn on a charging channel in the charging current control module to generate a charging current; when chargers are connected to multiple USB interfaces, charging channels in multiple corresponding charging current control modules are turned on to generate multiple charging currents, and the charging currents enter the current combiner, and are combined to form a total charging current, which is transmitted to the charging management chip to charge the battery. A requirement for large-current charging is achieved by using multiple USB interfaces in parallel for charging, which significantly reduces charging time of the battery, is easy to operate, and has a low cost.

## Claims

1. A mobile terminal, comprising:
- a battery (50);
- at least a first USB interface (10_1) and a second USB interface (10_2);
- a central processing unit (CPU) (30);
- a charging management chip (40); and
- a USB charging management module (20);
- wherein the USB charging management module is configured to output a corresponding detection voltage according to charger connection conditions of the USB interfaces, configured to turn on or off a charging channel of the corresponding USB interface according to an on/off command output by the CPU to generate a respective charging current, and configured to: when the charging channel is turned on, controlling a value of a charging current according to an adjustment signal sent by the CPU, combine charging currents, and transmit the charging currents to the charging management chip;
- the USB charging management module (20) comprising at least a first charger detection module (210_1) and a second charger detection module (210_2) configured to detect whether a charger is connected to a respective USB interface (10_1, 10_2), and output the detection voltage to the CPU (30);
- the USB charging management module (20) comprising at least a first charging current control module (220_1) and a second charging current control module (220_2), configured to turn on or off the respective charging channel according to the on/off command, and configured to control a value of the charging current according to the adjustment signal;
- the USB charging management module (20) comprising at least a first data processing module (230_1) and a second data processing module (230_2), configured to perform anti-interference and anti-static processing on USB data transmitted by the CPU; and
- the USB charging management module (20) comprising a current combiner (240), configured to combine the charging currents, and transmit the charging currents to the charging management chip (40);
- the CPU is configured to identify the charger connection conditions of the USB interfaces according to the detection voltage and output the corresponding on/off command, and configured to acquire the value of the charging currents and output the adjustment signal to the USB charging management module;
- the charging management chip is configured to transmit the charging current output by the USB charging management module to the battery to charge the battery; and
- the battery is connected to the USB charging management module through the charging management chip, and both the USB interfaces (10_1, 10_2) and the CPU are connected to the USB charging management module;
wherein
- the first charger detection module, the first charging current control module and the first data processing module are connected to the first USB interface and the CPU;
- the second charger detection module, the second charging current control module and the second data processing module are connected to the second USB interface and the CPU; and
- the first charging current control module and the second charging current control module are connected to the current combiner.

2. The mobile terminal according to claim 1, wherein a number of charger detection modules (210; 210_1, 210_2, 210_n), a number of charging current control modules (220; 220_1, 220_2, 220_n) and a number of data processing modules (230; 230_1, 230_2, 230_n) are the same as a number of the USB interfaces (10_1, 10_2).

3. The mobile terminal according to any of the preceding claims, wherein the charger detection modules, the charging current control modules, and the data processing modules are all connected to the respective USB interface and the CPU, and the charging current control modules are connected to the charging management chip through the current combiner.

4. The mobile terminal according to any of the preceding claims, wherein the first charger detection module comprises a first resistor (R1), a second resistor (R2), a third resistor (R3) and a first transistor (Q1);
the first charging current control module comprises a fourth resistor (R4), a fifth resistor (R5), a second transistor (Q2) and a first capacitor (C1); and
the first data processing module comprises a first common-mode suppression coil (FB1), a first transient voltage suppressor (TVS) tube T1), a second TVS tube (T2) and a third TVS tube (T3).

5. The mobile terminal according to claim 4, wherein the base of the first transistor is connected to a power source end (VUSB) of the first USB interface and the emitter of the second transistor through the first resistor, the base of the first transistor is further grounded through the second resistor, the collector of the first transistor is connected to the CPU and is further connected to a power source end (VCC) through the third resistor, and the emitter of the first transistor is grounded; and
the emitter of the second transistor is connected to the power source end of the first USB interface, the emitter of the second transistor is grounded through the first capacitor, and the base of the second transistor is connected to the CPU through the fourth resistor.

6. The mobile terminal according to any of claims 4 or 5, wherein a first end (1) of the first common-mode suppression coil is connected to a positive data line end (DM) of the first USB interface and the anode of the third TVS tube, a second end (2) of the first common-mode suppression coil is connected to the CPU, a third end (3) of the first common-mode suppression coil is connected to a negative data line end (DP) of the first USB interface and the anode of the second TVS tube, and a fourth end of the first common-mode suppression coil is connected to the CPU; and
the anode of the first TVS tube is connected to an identification end (ID) of the first USB interface and the CPU; the cathode of the first TVS tube, the cathode of the second TVS tube and the cathode of the third TVS tube are all grounded.

7. The mobile terminal according to any of claims 4 to 6, wherein the first transistor is an NPN transistor.

8. The mobile terminal according to any of the preceding claims, wherein the second charger detection module comprises a sixth resistor (R6), a seventh resistor (R7), an eighth resistor (R8) and a third transistor (Q3);
the second charging current control module comprises a ninth resistor (R9), a tenth resistor (R10), a fourth transistor (Q4) and a second capacitor (C2); and
the second data processing module comprises a second common-mode suppression coil (FB2), a fourth TVS tube (T4), a fifth TVS tube (T5) and a sixth TVS tube (T6).

9. The mobile terminal according to claim 8, wherein the base of the third transistor is connected to a power source end of the second USB interface and the emitter of the fourth transistor through the sixth resistor, the base of the third transistor is further grounded through the seventh resistor, the collector of the third transistor is connected to the CPU and is further connected to a power source end through the eighth resistor, and the emitter of the third transistor is grounded; and
the emitter of the fourth transistor is grounded through the second capacitor, and the base of the fourth transistor is connected to the CPU through the ninth resistor.

10. The mobile terminal according to any of claims 8 or 9, wherein a first end of the second common-mode suppression coil is connected to a positive data line end of the second USB interface and the anode of the sixth TVS tube, a second end of the second common-mode suppression coil is connected to the CPU, a third end of the second common-mode suppression coil is connected to a negative data line end of the first USB interface and the anode of the fifth TVS tube, and a fourth end of the second common-mode suppression coil is connected to the CPU;
the anode of the fourth TVS tube is connected to an identification end of the second USB interface and the CPU; and
the cathode of the fourth TVS tube, the cathode of the fifth TVS tube and the cathode of the sixth TVS tube are all grounded.

11. The mobile terminal according to any of claims 8 to 10, wherein the second transistor is a PNP transistor.

12. The mobile terminal according to any of the preceding claims, wherein the current combiner comprises an eleventh resistor (R11);
one end of the fifth resistor is connected to the CPU and the collector of the second transistor, and the other end of the fifth resistor is connected to the CPU and one end of the eleventh resistor; and
one end of the tenth resistor is connected to the CPU and the collector of the fourth transistor, and the other end of the tenth resistor is connected to the CPU and one end of the eleventh resistor.

## Patentansprüche

1. Mobiles Endgerät, umfassend:
- eine Batterie (50);
- mindestens eine erste USB-Schnittstelle (10_1) und eine zweite USB-Schnittstelle (10_2);
- eine Prozessoreinheit (30);
- einen Ladeverwaltungschip (40); und
- ein USB-Ladeverwaltungsmodul (20);
- wobei das USB-Ladeverwaltungsmodul konfiguriert ist zum Ausgeben einer entsprechenden Erkennungsspannung gemäß den Ladegerätverbindungsbedingungen der USB-Schnittstelle, konfiguriert ist zum Ein- oder Ausschalten eines Ladekanals der entsprechenden USB-Schnittstelle gemäß einem Ein/Aus-Befehl, der von der Prozessoreinheit ausgegeben wird, um einen entsprechenden Ladestrom zu erzeugen, und konfiguriert ist, wenn der Ladekanal eingeschaltet ist, zum Steuern eines Werts eines Ladestroms gemäß einem Einstellsignal, das von der Prozessoreinheit gesendet wird, zum Kombinieren der Ladeströme und zum Übertragen der Ladeströme an den Ladeverwaltungschip;
- wobei das USB-Ladeverwaltungsmodul (20) mindestens ein erstes Ladegeräteerkennungsmodul (210_1) und ein zweites Ladegeräteerkennungsmodul (210_2) umfasst, die konfiguriert sind zum Erkennen, ob ein Ladegerät an eine jeweilige USB-Schnittstelle (10_1, 10_2) angeschlossen ist, und zum Ausgeben der Erkennungsspannung an die Prozessoreinheit (30);
- wobei das USB-Ladeverwaltungsmodul (20) mindestens ein erstes Ladestromsteuermodul (220_1) und ein zweites Ladestromsteuermodul (220_2) umfasst, die konfiguriert sind zum Ein- oder Ausschalten des jeweiligen Ladekanals gemäß dem Ein/Aus-Befehl, und die konfiguriert sind zum Steuern eines Werts des Ladestroms gemäß dem Einstellsignal;
- wobei das USB-Ladeverwaltungsmodul (20) mindestens ein erstes Datenverarbeitungsmodul (230_1) und ein zweites Datenverarbeitungsmodul (230_2) umfasst, die konfiguriert sind zum Ausführen einer Antiinterferenz- und einer Antistatik-Verarbeitung an den USB-Daten, die von der Prozessoreinheit übertragen werden; und
- wobei das USB-Ladeverwaltungsmodul (20) eine Stromkombiniervorrichtung (240) umfasst, das konfiguriert ist zum Kombinieren der Ladeströme und zum Übertragen der Ladeströme an den Ladeverwaltungschip (40);
- wobei die Prozessoreinheit konfiguriert ist zum Identifizieren der Ladegerätverbindungsbedingungen der USB-Schnittstellen gemäß der Erkennungsspannung und zum Ausgeben des entsprechenden Ein/Aus-Befehls, und konfiguriert ist zum Erlangen des Werts der Ladeströme und zum Ausgeben des Einstellsignals an das USB-Ladeverwaltungsmodul;
- wobei der Ladeverwaltungschip konfiguriert ist zum Übertragen des Ladestroms, der von dem USB-Ladeverwaltungsmodul an die Batterie ausgegeben wird, um die Batterie zu laden; und
- wobei die Batterie durch den Ladeverwaltungschip mit dem USB-Ladeverwaltungsmodul verbunden ist, und sowohl die USB-Schnittstellen (10_1, 10_2) als auch die Prozessoreinheit mit dem USB-Ladeverwaltungsmodul verbunden sind;
wobei
- das erste Ladegeräteerkennungsmodul, das erste Ladestromsteuermodul und das erste Datenverarbeitungsmodul mit der ersten USB-Schnittstelle und der Prozessoreinheit verbunden sind;
- das zweite Ladegeräteerkennungsmodul, das zweite Ladestromsteuermodul und das zweite Datenverarbeitungsmodul mit der zweiten USB-Schnittstelle und der Prozessoreinheit verbunden sind; und
- das erste Ladestromsteuermodul und das zweite Ladestromsteuermodul mit der Stromkombiniervorrichtung verbunden sind.

2. Mobilfunkendgerät nach Anspruch 1, wobei eine Anzahl von Ladegeräteerkennungsmodulen (210; 210_1, 210_2, 210_n), eine Anzahl von Ladestromsteuermodulen (220; 220_1, 220_2, 220_n) und eine Anzahl von Datenverarbeitungsmodulen (230; 230_1, 230_2, 230_n) gleich einer Anzahl von USB-Schnittstellen (10_1, 10_2) sind.

3. Mobilfunkendgerät nach einem der vorhergehenden Ansprüche, wobei die Ladegeräteerkennungsmodule, die Ladestromsteuermodule und die Datenverarbeitungsmodule alle mit der jeweiligen USB-Schnittstelle und der Prozessoreinheit verbunden sind und wobei die Ladestromsteuermodule über die Stromkombiniervorrichtung mit dem Ladeverwaltungschip verbunden sind.

4. Mobilfunkendgerät nach einem der vorhergehenden Ansprüche, wobei das erste Ladegeräteerkennungsmodul einen ersten Widerstand (R1), einen zweiten Widerstand (R2), einen dritten Widerstand (R3) und einen ersten Transistor (Q1) umfasst;
wobei das erste Ladestromsteuermodul einen vierten Widerstand (R4), einen fünften Widerstand (R5), einen zweiten Transistor (Q2) und einen ersten Kondensator (Cl) umfasst; und
wobei das erste Datenverarbeitungsmodul eine erste Common-Mode-Entstördrossel (FB1), eine erste Transientenspannungsentstör-, TVS-, Röhre (T1),
eine zweite TVS-Röhre (T2) und eine dritte TVS-Röhre (T3) umfasst.

5. Mobilfunkendgerät nach Anspruch 4, wobei die Basis des ersten Transistors mit einem Stromversorgungsquellenende (VUSB) der ersten USB-Schnittstelle und durch den ersten Widerstand mit dem Emitter des zweiten Transistors verbunden ist,
wobei die Basis des ersten Transistors außerdem durch den zweiten Widerstand geerdet ist, wobei der Kollektor des ersten Transistors mit der Prozessoreinheit verbunden ist und außerdem durch den dritten Widerstand mit einem Stromversorgungsquellenende (VCC) verbunden ist, und wobei der Emitter des ersten Transistors geerdet ist; und
wobei der Emitter des zweiten Transistors mit dem Stromversorgungsquellenende der ersten USB-Schnittstelle verbunden ist, wobei der Emitter des zweiten Transistors durch den ersten Kondensator geerdet ist, und wobei die Basis des zweiten Transistors durch den vierten Widerstand mit der Prozessoreinheit verbunden ist.

6. Mobilfunkendgerät nach einem der Ansprüche 4 oder 5, wobei ein erstes Ende (1) der ersten Common-Mode-Entstördrossel mit einem positiven Datenleitungsende (DM) der ersten USB-Schnittstelle und der Anode der dritten TVS-Röhre verbunden ist, wobei ein zweites Ende (2) der ersten Common-Mode-Entstördrossel mit der Prozessoreinheit verbunden ist, wobei ein drittes Ende (3) der ersten Common-Mode-Entstördrossel mit einem negativen Datenleitungsende (DP) der ersten USB-Schnittstelle und der Anode der zweiten TVS-Röhre verbunden ist, und wobei ein viertes Ende der ersten Common-Mode-Entstördrossel mit der Prozessoreinheit verbunden ist; und
wobei die Anode der ersten TVS-Röhre mit einem Identifizierungsende (ID) der ersten USB-Schnittstelle und der Prozessoreinheit verbunden ist; wobei die Kathode der ersten TVS-Röhre, die Kathode der zweiten TVS-Röhre und die Kathode der dritten TVS-Röhre alle geerdet sind.

7. Mobilfunkendgerät nach einem der Ansprüche 4 bis 6, wobei der erste Transistor ein npn-Transistor ist.

8. Mobilfunkendgerät nach einem der vorhergehenden Ansprüche, wobei das zweite Ladegeräteerkennungsmodul einen sechsten Widerstand (R6), einen siebten Widerstand (R7), einen achten Widerstand (R8) und einen dritten Transistor (Q3) umfasst;
wobei das zweite Ladestromsteuermodul einen neunten Widerstand (R9), einen zehnten Widerstand (R10), einen vierten Transistor (Q4) und einen zweiten Kondensator (C2) umfasst; und
wobei das zweite Datenverarbeitungsmodul eine zweite Common-Mode-Entstördrossel (FB2), eine vierte TVS-Röhre (T4), eine fünfte TVS-Röhre (T5) und eine sechste TVS-Röhre (T6) umfasst.

9. Mobilfunkendgerät nach Anspruch 8, wobei die Basis des dritten Transistors mit einem
Stromversorgungsquellenende der zweiten USB-Schnittstelle und durch den sechsten Widerstand mit dem Emitter des vierten Transistors verbunden ist, wobei die Basis des dritten Transistors außerdem durch den siebten Widerstand geerdet ist,
wobei der Kollektor des dritten Transistors mit der Prozessoreinheit verbunden ist und außerdem durch den achten Widerstand mit einem Stromversorgungsquellenende verbunden ist, und wobei der Emitter des dritten Transistors geerdet ist; und
wobei der Emitter des vierten Transistors durch den zweiten Kondensator geerdet ist, und wobei die Basis des vierten Transistors durch den neunten Widerstand mit der Prozessoreinheit verbunden ist.

10. Mobilfunkendgerät nach einem der Ansprüche 8 oder 9, wobei ein erstes Ende der zweiten Common-Mode-Entstördrossel mit einem positiven Datenleitungsende der zweiten USB-Schnittstelle und der Anode der sechsten TVS-Röhre verbunden ist, wobei ein zweites Ende der zweiten Common-Mode-Entstördrossel mit der Prozessoreinheit verbunden ist, wobei ein drittes Ende der zweiten Common-Mode-Entstördrossel mit einem negativen Datenleitungsende der ersten USB-Schnittstelle und der Anode der fünften TVS-Röhre verbunden ist, und wobei ein viertes Ende der zweiten Common-Mode-Entstördrossel mit der Prozessoreinheit verbunden ist; und
wobei die Anode der vierten TVS-Röhre mit einem Identifizierungsende der zweiten USB-Schnittstelle und der Prozessoreinheit verbunden ist; und
wobei die Kathode der vierten TVS-Röhre, die Kathode der fünften TVS-Röhre und die Kathode der sechsten TVS-Röhre alle geerdet sind.

11. Mobilfunkendgerät nach einem der Ansprüche 8 bis 10, wobei der zweite Transistor ein pnp-Transistor ist.

12. Mobilfunkendgerät nach einem der vorhergehenden Ansprüche, wobei die Stromkombiniervorrichtung einen elften Widerstand (R11) umfasst;
wobei ein Ende des fünften Widerstands mit der Prozessoreinheit und dem Kollektor des zweiten Transistors verbunden ist, und wobei das andere Ende des fünften Widerstands mit der Prozessoreinheit und einem Ende des elften Widerstands verbunden ist; und
wobei ein Ende des zehnten Widerstands mit der Prozessoreinheit und dem Kollektor des vierten Transistors verbunden ist, und wobei das andere Ende des zehnten Widerstands mit der Prozessoreinheit und einem Ende des elften Widerstands verbunden ist.

## Revendications

1. Terminal mobile, comprenant :
- une batterie (50) ;
- au moins une première interface USB (10_1) et une deuxième interface USB (10_2) ;
- une unité centrale de traitement (CPU) (30) ;
- une puce de gestion de charge (40) ; et
- un module de gestion de charge USB (20) ;
- dans lequel le module de gestion de charge USB est configuré pour délivrer en sortie une tension de détection correspondant à des conditions de branchement de chargeur des interfaces USB, configuré pour rendre passant ou bloqué un canal de charge de l'interface USB correspondante en fonction d'une commande d'activation/désactivation délivrée en sortie par la CPU pour produire un courant de charge respectif, et configuré pour : lorsque le canal de charge est passant, commander une valeur d'un courant de charge en fonction d'un signal de réglage envoyé par la CPU, combiner des courants de charge et envoyer les courants de charge à la puce de gestion de charge ;
- le module de gestion de charge USB (20) comprenant au moins un premier module de détection de chargeur (210_1) et un deuxième module de détection de chargeur (210_2) configurés pour détecter si un chargeur est branché sur une interface USB (10_1, 10_2) respective, et transmettre la tension de détection à la CPU (30) ;
- le module de gestion de charge USB (20) comprenant au moins un premier module de commande de courant de charge (220_1) et un deuxième module de commande de courant de charge (220_2), configurés pour rendre passant ou bloqué le canal de charge respectif en fonction de la commande d'activation/désactivation, et configurés pour commander une valeur du courant de charge en fonction du signal de réglage ;
- le module de gestion de charge USB (20) comprenant au moins un premier module de traitement de données (230_1) et un deuxième module de traitement de données (230_2), configurés pour effectuer un traitement anti-interférences et antistatique sur les données USB transmises par la CPU ; et
- le module de gestion de charge USB (20) comprenant un dispositif de combinaison de courants (240), configuré pour combiner les courants de charge et transmettre les courants de charge à la puce de gestion de charge (40) ;
- la CPU est configurée pour identifier les conditions de branchement de chargeur des interfaces USB en fonction de la tension de détection et délivrer en sortie la commande activation/désactivation correspondante, et configurée pour acquérir la valeur des courants de charge et transmettre le signal de réglage au module de gestion de charge USB ;
- la puce de gestion de charge est configurée pour transmettre à la batterie le courant de charge délivré en sortie par le module de gestion de charge USB, pour charger la batterie ; et
- la batterie est reliée au module de gestion de charge USB par l'intermédiaire de la puce de gestion de charge, et les interfaces USB (10_1, 10_2) et la CPU sont toutes reliées au module de gestion de charge USB ;
dans lequel
- le premier module de détection de chargeur, le premier module de commande de courant de charge et le premier module de traitement de données sont reliés à la première interface USB et à la CPU ;
- le deuxième module de détection de chargeur, le deuxième module de commande de courant de charge et le deuxième module de traitement de données sont reliés à la deuxième interface USB et à la CPU ; et
- le premier module de commande de courant de charge et le deuxième module de commande de courant de charge sont reliés au dispositif de combinaison de courants.

2. Terminal mobile selon la revendication 1, dans lequel un nombre de modules de détection de chargeur (210 ; 210_1, 210_2, 210_n), un nombre de modules de commande de courant de charge (220 ; 220_1, 220_2, 220_n) et un nombre de modules de traitement de données (230 ; 230_1, 230_2, 230_n) sont identiques au nombre des interfaces USB (10_1, 10_2).

3. Terminal mobile selon l'une quelconque des revendications précédentes, dans lequel les modules de détection de chargeur, les modules de commande de courant de charge et les modules de traitement de données sont tous reliés à l'interface USB respective et à la CPU, et les modules de commande de courant de charge sont reliés à la puce de gestion de charge par l'intermédiaire du dispositif de combinaison de courants.

4. Terminal mobile selon l'une quelconque des revendications précédentes, dans lequel le premier module de détection de chargeur comprend une première résistance (R1), une deuxième résistance (R2), une troisième résistance (R3) et un premier transistor (Q1) ;
le premier module de commande de courant de charge comprend une quatrième résistance (R4), une cinquième résistance (R5), un deuxième transistor (Q2) et un premier condensateur (C1) ; et
le premier module de traitement de données comprend une première bobine de suppression de mode commun (FB1), un premier tube limiteur de surtension (TVS) (T1), un deuxième tube TVS (T2) et un troisième tube TVS (T3).

5. Terminal mobile selon la revendication 4, dans lequel la base du premier transistor est reliée à une extrémité de source d'alimentation (VUSB) de la première interface USB et à l'émetteur du deuxième transistor par la première résistance, la base du premier transistor est également reliée à la masse par la deuxième résistance, le collecteur du premier transistor est relié à la CPU et est également relié à une extrémité de source d'alimentation (VCC) par la troisième résistance, et l'émetteur du premier transistor est relié à la masse ;
l'émetteur du deuxième transistor est relié à l'extrémité de source d'alimentation de la première interface USB, l'émetteur du deuxième transistor est relié à la masse par le premier condensateur, et la base du deuxième transistor est reliée à la CPU par la quatrième résistance.

6. Terminal mobile selon l'une quelconque des revendications 4 et 5, dans lequel une première extrémité (1) de la première bobine de suppression de mode commun est reliée à une extrémité de ligne de données positive (DM) de la première interface USB et à l'anode du troisième tube TVS, une deuxième extrémité (2) de la première bobine de suppression de mode commun est reliée à la CPU, une troisième extrémité (3) de la première bobine de suppression de mode commun est reliée à une extrémité de ligne de données négative (DP) de la première interface USB et à l'anode du deuxième tube TVS, et une quatrième extrémité de la première bobine de suppression de mode commun est reliée à la CPU ; et
l'anode du premier tube TVS est reliée à une extrémité d'identification (ID) de la première interface USB et à la CPU ; la cathode du premier tube TVS, la cathode du deuxième tube TVS et la cathode du troisième tube TVS sont reliées chacune à la masse.

7. Terminal mobile selon l'une quelconque des revendications 4 à 6, dans lequel le premier transistor est un transistor NPN.

8. Terminal mobile selon l'une quelconque des revendications précédentes, dans lequel le deuxième module de détection de chargeur comprend une sixième résistance (R6), une septième résistance (R7), une huitième résistance (R8) et un troisième transistor (Q3) ;
le deuxième module de commande de courant de charge comprend une neuvième résistance (R9), une dixième résistance (R10), un quatrième transistor (Q4) et un deuxième condensateur (C2) ; et
le deuxième module de traitement de données comprend une deuxième bobine de suppression de mode commun (FB2), un quatrième tube TVS (T4), un cinquième tube TVS (T5) et un sixième tube TVS (T6).

9. Terminal mobile selon la revendication 8, dans lequel la base du troisième transistor est reliée à une extrémité de source d'alimentation de la deuxième interface USB et à l'émetteur du quatrième transistor par la sixième résistance, la base du troisième transistor est également reliée à la masse par la septième résistance, le collecteur du troisième transistor est relié à la CPU et est également relié à une extrémité de source d'alimentation par la huitième résistance, et l'émetteur du troisième transistor est relié à la masse ; et
l'émetteur du quatrième transistor est relié à la masse par le deuxième condensateur, et la base du quatrième transistor est reliée à la CPU par la neuvième résistance.

10. Terminal mobile selon l'une quelconque des revendications 8 et 9, dans lequel une première extrémité de la deuxième bobine de suppression de mode commun est reliée à une extrémité de ligne de données positive de la deuxième interface USB et à l'anode du sixième tube TVS, une deuxième extrémité de la deuxième bobine de suppression de mode commun est reliée à la CPU, une troisième extrémité de la deuxième bobine de suppression de mode commun est reliée à une extrémité de ligne de données négative de la première interface USB et à l'anode du cinquième tube TVS, et une quatrième extrémité de la deuxième bobine de suppression de mode commun est reliée à la CPU ;
l'anode du quatrième tube TVS est reliée à une extrémité d'identification de la deuxième interface USB et à la CPU ; et
la cathode du quatrième tube TVS, la cathode du cinquième tube TVS et la cathode du sixième tube TVS sont reliées chacune à la masse.

11. Terminal mobile selon l'une quelconque des revendications 8 à 10, dans lequel le deuxième transistor est un transistor PNP.

12. Terminal mobile selon l'une quelconque des revendications précédentes, dans lequel le dispositif de combinaison de courants comprend une onzième résistance (R11) ;
une extrémité de la cinquième résistance est reliée à la CPU et au collecteur du deuxième transistor, et l'autre extrémité de la cinquième résistance est reliée à la CPU et à une extrémité de la onzième résistance ; et
une extrémité de la dixième résistance est reliée à la CPU et au collecteur du quatrième transistor, et l'autre extrémité de la dixième résistance est reliée à la CPU et à une extrémité de la onzième résistance.
